(19) Europäisches Patentamt
European Patent Office
Office européen des brevets

(11) Veröffentlichungsnummer: **0 396 579 B1**

(12) **EUROPÄISCHE PATENTSCHRIFT**

(45) Veröffentlichungstag der Patentschrift: **08.09.93**

(51) Int. Cl.5: **G01S 7/66**

(21) Anmeldenummer: **89900137.4**

(22) Anmeldetag: **07.12.88**

(86) Internationale Anmeldenummer:
**PCT/DE88/00752**

(87) Internationale Veröffentlichungsnummer:
**WO 89/05461 (15.06.89 89/13)**

(54) **VERFAHREN UND VORRICHTUNG ZUM VERMESSEN VON ENTFERNUNGEN ÜBER DIE LAUFZEIT VON IMPULSEN.**

(30) Priorität: **07.12.87 DE 3741338**

(43) Veröffentlichungstag der Anmeldung:
**14.11.90 Patentblatt 90/46**

(45) Bekanntmachung des Hinweises auf die
Patenterteilung:
**08.09.93 Patentblatt 93/36**

(84) Benannte Vertragsstaaten:
**AT BE CH DE FR GB IT LI LU NL SE**

(56) Entgegenhaltungen:
DE-A- 3 205 425    DE-A- 3 400 785
DE-A- 3 442 686    DE-B- 2 620 835
DE-C- 2 646 541    US-A- 4 606 015

(73) Patentinhaber: **E.T.R. ELEKTRONIK TECHNO-
LOGIE RUMP GMBH
Heinrich-Hertz-Strasse 2
D-44227 Dortmund(DE)**

(72) Erfinder: **RUMP, Hanns
Biesenkamp 24**
**D-4750 Unna-Massen(DE)**
Erfinder: **SCHULTE, Johannes
Castroper Strasse 86
D-4600 Dortmund 15(DE)**
Erfinder: **PREUSS, Rainer
Am Kucksberg 7
D-4600 Dortmund 50(DE)**
Erfinder: **HILLER, Jörg
Am Bollwerk 20
D-4802 Wetter 1(DE)**
Erfinder: **SCHOCKENBAUM, Heinz-Walter
Friedrich-List-Str. 7
D-4750 Unna(DE)**
Erfinder: **LIEDTKE, Jochen
Bauklohstrasse 26
D-4630 Bochum-Dahlhausen(DE)**

(74) Vertreter: **Mierswa, Klaus, Dipl.-Ing. et al
Friedrichstrasse 171
D-68199 Mannheim (DE)**

EP 0 396 579 B1

## Beschreibung

Technisches Gebiet:

Die Erfindung betrifft ein Verfahren zum Vermessen von Entfernungen über die Laufzeit von Impulsen nach dem Impuls-Echo-Laufzeit-Verfahren (Echobetrieb) oder dem Impuls-Reflex-Laufzeit-Vertahren (Transponderbetrieb) unter Benützung von Wellen mit definierter Ausbreitungsgeschwindigkeit, vorzugsweise Ultraschallwellen, wobei zum Senden ein Impulspaket definierter Länge und Frequenz erzeugt und nach einer laufzeitabhängigen Zeit als Echo oder Reflex empfangen wird.

Stand der Technik:

Durch die DE 3442686 ist ein Vorrichtung und Verfahren zur Positionierung von Punkten im Raum mittels der Bestimmung von Distanzen nach dem Impuls-Echo-Laufzeitprinzip bekannt, wobei Ultraschallimpulse genutzt werden.

Durch die DE-A1-3607336 ist es bekannt, die Störsicherheit von Ultraschall-Echo-Geräten dadurch zu erhöhen, in dem über eine geeignete Schaltung geprüft wird, ob ein Echosignal über eine bestimmte Anzahl von Meßzyklen konstant ansteht. In der DE-A1-3620783, die nicht zum Stand der Technik gehört, wird dieser Gedanke insofern erweitert, als durch einen Mikroprozessor überprüft wird, ob die eingehenden Echo-Signale aus dem gleichen zeitlichen (räumlichen) Sektor kommen.

Ebenso ist der Transponderbetrieb bekannt, beispielsweise durch die US-A-4026654, bei dem ein Objekt (Kleinflugzeug, kleines Schiff) einen "Transponder" mit sich führt, der aktiv dann ein Signal aussendet, wenn er ein bestimmtes Signal empfängt. Dadurch wird erreicht, daß z.B. dem Radarempfänger einer Radaranlage auch bei sehr kleinen bzw. schwachen Objekten ein auswertbares Signal angeboten bekommt.

Derartige Ultraschall-Meßverfahren sind relativ anfällig gegenüber zufälligen anderen Ereignissen, insbesondere Schallereignissen. Fällt ein derartiges Ereignis in die Meßzeit, wird es als "Echo" oder "Transponderreflex" bewertet und führt zu einer Fehlmessung. Ebenso wird das Meßergebnis bei sich ändernden Umgebungsparametern, insbesondere derjenigen der Luft, leicht verfälscht.

Durch die DE-C2-2646541 ist ein Verfahren zum Auslösen von Sendeimpulsen bei der Dickenmessung von Prüfstücken mittels Ultraschallsignalen zur Verkürzung der Meßzykluszeiten bekanntgeworden, bei dem ein neuer Sendeimpuls erst dann ausgelöst wird, wenn ein vom vorhergehenden Sendeimpuls herrührendes Echosignal empfangen worden und danach eine vorgegebene Verzögerungszeit abgelaufen ist. Bei Empfang eines aus mehreren Echoimpulsen bestehenden Echosignals wird der nachfolgende Sendeimpuls erst dann ausgelöst, wenn vor dem Zeitpunkt des Eintreffens eines eine vorgegebene Amplitudenschwelle überschreitenden Echoimpulses die vorgegebene Verzögerungszeit abgelaufen und innerhalb dieser Zeit kein weiterer die Amplitudenschwelle überschreitender Echoimpuls aufgetreten ist.

Durch die US-A-4606015 ist Verfahren zum Vermessen von Entfernungen über die Laufzeit von Ultraschall-Impulsen nach dem Impuls-Echo-Laufzeit-Verfahren bekannt geworden, welches bei Entfernungen unterhalb einer gegebenen Distanz, vorzugsweise 1m, die Frequenz der ausgesendeten Ultraschallwelle in eine solche geringerer Wellenlänge ändert, wobei hierfür zwei Ultraschall-Generatoren mit vorgegebenen Frequenzen vorhanden sind.

Die DE-A1-32 05 425 offenbart ein Echolot-Verfahren, bei welchem eine Fensterelektronik mit einem Regelkreis zusammenarbeitet, wobei sich der Verstärker auf die stärksten Echos einstellt, die in das Fenster fallen, welches durch den Mittelwert der Echos der vorhergehenden Messung gesteuert wird. Alle nachfolgenden Echos, die vor dem mittleren Echo eintreffen, werden nun unterdrückt. Dabei öffnet der Fensterimpuls bereits ab einer gewissen Entfernung vor dem eingestellten Mittelwert. Von diesem Stand der Technik wird im Oberbegriff der Erfindung ausgegangen.

Technische Aufgabe:

Der Erfindung liegt die Aufgabe zugrunde, ein Verfahren des eingangs genannten technischen Gebietes zu schaffen, welches ein hohes Maß an Störsicherheit gegenüber zufälligen Impulsen oder Störimpulsen aufweist, wobei sich ändernde Umgebungsparameter weitestgehend keinen Einfluß mehr haben sollen.

Darstellung der Erfindung:

Die Lösung der Aufgabe besteht erfindungsgemäß in den Merkmalen des Anspruchs 1. Weitere Ausgestaltungen der Erfindung sind in den Unteransprüchen gekennzeichnet. Eine erfindungsgemäße Vorrichtung ist in Anspruch 5 gekennzeichnet.

Das erfindungsgemäße Verfahren besitzt den hervorstechenden Vorteil, daß dieses praktisch störunanfällig ist und ein hohes Maß an Störfestigkeit gegenüber zufälligen Impulsen oder Störimpulsen aufweist. Der Grund liegt darin, daß Störereignisse praktisch unmöglich auf gleichen Punkten der Zeitachse gehäuft auftreten können, vielmehr sind zufällige Störereignisse stets statistisch verteilt. Deshalb wird durch die erfindungsgemäße statistische Auswertung die Meßsicherheit und - genauigkeit erheblich erhöht, in dem aus einer größeren Anzahl von Einzelmessungen das Vorhandensein einer kleineren Anzahl von Messungen mit vergleichbaren bzw. innerhalb einer gegebenen Toleranz gleichen Ergebnissen gefordert wird. In einer bevorzugten Ausgestaltung des Verfahrens werden vier gleiche oder bzw. nahezu gleiche Meßwerte, die unmittelbar hintereinanderliegen, verwendet.

Bei der Verwendung von Ultraschallwellen besitzt das erfindungsgemäße Verfahren den Vorteil, daß kürzere Distanzen, vorzugsweise zwischen Null bis 40 m, zwischen Raumwänden sehr genau ermittelt werden können und dabei auch die Fläche oder der Rauminhalt eines Raumes sehr genau angebbar ist.

Das Verfahren ist in vorteilhafter Weise davon abhängig, ob überhaupt ein auswertefähiger Impuls als Echo oder Reflex des Transponders empfangen wird. Insbesondere bei Distanzen, die nahe an der Reichweitengrenze des Verfahrens liegen, ist eine zuverlässige Übertragung nicht immer gegeben. Das führt beim Stand der Technik dazu, daß keine Messung möglich ist, bzw. sehr unsichere Meßergebnisse erzielt werden, beim erfindungsgemäßen Verfahren hingegen eine genaue Aussage, nämlich "Fehler" oder "Messung" getroffen wird.

In vorteilhafter Weise wird zur Durchführung des Verfahrens innerhalb der Vorrichtung ein Mikroprozessor als zentrales Auswerte- und Steuerglied benutzt, der mit der nachfolgend beschriebenen Logik arbeitet:

Die Messung wird durch Auslösen der "Meßtaste" gestartet. Jede Messung bzw. jeder Meßzyklus besteht aus einer Vielzahl von Einzelmessungen. Die maximale Meßentfernung ist im Vorrichtung als maximale Laufzeit definiert.

In jedem Fall wird eine neue Einzelmessung erst ausgelöst, wenn diese Maximumzeit ohne Eingang eines Echoimpulses verstreicht.

Maximal können - ohne daß ein auswertefähiger Eingang registriert wird - in der bevorzugten Ausführung 20 Messungen gestartet werden. Wird ein Echo bzw. die Antwort des Transpondergerätes registriert, wird dadurch unverzüglich die nächste Messung ausgelöst, ohne daß die maximale Zeit abgewartet wird, was die Geschwindigkeit der Messung erheblich erhöht. Gleichzeitig wird vom Mikroprozessor die Laufzeit des Impulses registriert, in eine Entfernungangabe umgerechnet und gespeichert.

Im weiteren Verlauf der Messung registriert das Programm die eingehenden Meßwerte gleichlautend und speichert diese ab und überprüft die einzelnen Meßwerte auf Gleichheit, die innerhalb einer festgelegten Toleranz, z.B. ±1%, vom Meßwert liegen darf. Erst wenn eine bestimmte Anzahl von annähernd gleichen Messungen vorliegt, bildet das Programm aus diesen Werten den Mittelwert und bringt diesen zur Anzeige. Bevorzugt sind vier nahezu gleiche, unmittelbar hintereinander erfolgende Meßwerte notwendig, was die Zuverlässigkeit erheblich erhöht.

Des weiteren sind bei Erreichen der Reichweite oder bei Meßzielen mit sehr starker Strukturierung der Oberfläche die Schwankungen von Meßwert zu Meßwert so hoch, daß der Mikroprozessor die Messungen verwirft und ähnlich wie bei erfolgloser Messung über eine geeignete Anzeige meldet, daß eine zuverlässige Messung nicht möglich ist. In der bevorzugten Ausführung erfolgt dies durch die Anzeige des Schriftzuges "ERROR".

Der Einsatz eines Mikroprozessors ermöglicht weitere nachstehend beschriebene Ausgestaltungen der Erfindung. Es ist bekannt, daß die Schallgeschwindigkeit in der Luft nach folgendem Ausdruck temperaturabhängig ist:

$$C_T = 331,3 \times (1 + \sqrt{T/273,16})$$

wobei $C_T$ = Schallgeschwindigkeit bei Temperatur T in Grad Celsius und T = Temperatur in Grad Celsius bedeuten.

Die Reichweite des erfindungsgemäßen Verfahrens ist bei Verwendung von Schallwellen zwangsläufig begrenzt. Bei bevorzugter Verwendung von Ultraschall beträgt die Reichweite - je nach Witterung - in vorteilhafter Weise zwischen mindestens 25-40 m im Transponderbetrieb.

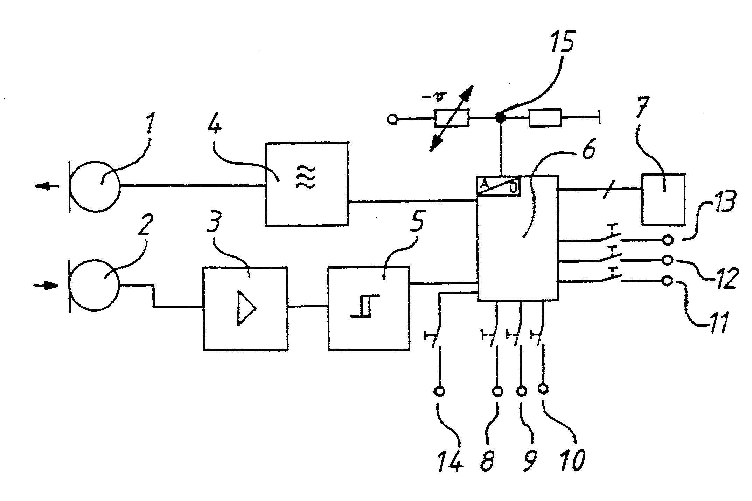

Kurzbeschreibung der Zeichnung:

Die Zeichnung zeigt das Blockschaltbild eines Beispiels einer Vorrichtung, die nach dem erfindungsgemäßen Verfahren arbeitet.

Darstellung einer bevorzugten Ausführungsform des erfindungsgemäßen Verfahrens und eines Beispiels der Vorrichtung:
Ein zentraler Mikroprozessor 6 steuert einen Ultraschallsender 4 an, dessen Ausgang auf einen Sende-Schallwandler 1 gelegt ist. Die im Empfänger-Schallwandler 2 ankommenden Impulse werden in einem Verstärker 3 verstärkt und nach Passieren eines Komparators 5 dem Mikroprozessor 6 zugeführt, der ein Anzeige-Display 7 ansteuert.

In einem Spannungsteiler 15 - (-v) (Zeichnung) wird mit Hilfe des temperaturabhängigen Widerstandes 15 eine temperaturabhängige Spannung erzeugt, die durch den Mikroprozessor oder einen geeigneten Analog-Digitalwandler gelesen und im Mikroprozessor in die Temperatur umgerechnet wird. Aus dem obengenannten Ausdruck wird ein Faktor zu einer vorgegebenen Standardtemperatur errechnet. Der gefundene Meßwert wird mit diesem Faktor korrigiert, womit rechnerisch eine Temperaturkompensation durchgeführt ist. Vorteilhaft verfügt die erfindungsgemäße Vorrichtung über eine "TEMPERATURTASTE" 12, mit deren Hilfe die Temperatur angezeigt werden kann.

An den Mikroprozessor sind des weiteren eine Meßtaste 8, eine Multiplikationstaste 9, eine Additionstaste 10 und eine Löschtaste 11, wie auch die Umschaltung 12 auf Temperaturanzeige, eine Umschaltung 13 auf Echobetrieb und eine Umschaltung 14 auf Transponderbetrieb angeschlossen.

Das erfindungsgemäße Verfahren und die Vorrichtung ermöglichen eine zeitsparende Handhabung beim Ausmessen von Flächen und Volumina. Durch Betätigen der Multiplikationstaste 9 wird der im Anzeigeregister des Mikroprozessors befindliche Wert in ein Rechenregister übernommen. Durch nochmaliges Drücken der Multiplikationstaste 9 wird ein weiterer und neuer Meßwert aus dem Anzeigeregister geholt und mit dem bereits abgespeicherten Wert multipliziert und im Anzeige-Display 7 angezeigt wie auch die Tatsache, daß es sich um Quadratmeter ($m^2$) handelt. Durch nochmaliges Betätigen der Multiplikationstaste 9 bei erneuter Messung wird das Volumen berechnet und in Kubikmeter ($m^3$) angezeigt.

Bei der Vermessung von längeren Distanzen kann durch Drücken einer Additionstaste der Meßwert gespeichert und bei folgenden Messungen und nachfolgendem Drücken der Additionstaste der neue Wert dem gespeicherten Wert hinzuaddiert werden. Die Anzahl der Messungen ist prinzipiell beliebig, so daß auch größere Entfernungen einfach ausgemessen werden können, ohne daß Aufzeichnungen oder zeitraubende Additionen gemacht werden müssen.

Des weiteren kann in vorteilhafter Weise die Minimum-Distanz softwaremäßig eingestellt werden, um eine Anzeige zu ermöglichen, wenn die Anzeige kleiner als ein vorgegebener Wert wird.

Dazu ist vorausschickend zu erläutern, daß normalerweise ein Impulspaket, bestehend aus mehreren Einzelschwingungen, ausgesendet wird. Zur Erreichung einer sicheren Reichweite ist ein derartiges Impulspaket in der Regel ca. 10 bis 25 Einzelschwingungen lang.

Da dieses Impulspaket natürlich eine gewisse Zeit benötigt, wobei einmal die eigentliche Sendezeit, zum anderen die Abklingzeit des Sende-Schallwandlers zu betrachten ist, ist der Empfang fremder Signale nicht möglich. In dieser Zeit wird logisch die Eingangsbeschaltung gesperrt. In der Praxis ist damit eine Minimum-Entfernung von ca. 0,5 bis 0,8 m zu erreichen.

Würde man jedoch den Sendeimpuls äußerst kurz machen, z.B. nur eine Schwingung, würde auch die Sendezeit und die Abklingzeit erheblich kleiner sein und damit würde selbstverständlich auch der Minimum-Abstand erheblich verkleinert werden. Nachteilig wäre, daß damit auch die Reichweite erheblich geringer würde, weil die Energie des Impulses geringer wäre.

Erfindungsgemäß wird deshalb bei Unterschreiten des vom Hauptprozessor erkannten Abstandes von $d < X$ [m] automatisch und softwaregesteuert die Länge des auszustrahlenden Schwingungspaketes erheblich verkürzt. Wenn die Entfernung kleiner ist als ein vorgegebener Wert, wird somit

1. softwaremäßig der Sende-Impuls verkürzt,
2. der Auswerte-Zyklus neu gestartet.

Gleichzeitig wird das empfängerseitige Tor von der ursprünglichen Zeitlänge auf eine angemessene Zeitlänge reduziert, die jedenfalls erheblich kleiner ist, als in nichtreduziertem Zustand. Die Minimum-Distanz kann in vorteilhafter Weise softwareabhängig eingestellt werden.

Bei erkannter Unterschreitung einer gegebenen Distanz wird die ermittelte Distanz nicht zur Anzeige gebracht, sondern ein neuer Meßzyklus gestartet. Die Länge des ausgestrahlten Impulspaketes wird reduziert und kann des weiteren im kleinsten Falle aus nur einem einzigen Impuls (Schwingung) bestehen. Das empfängerseitig bestehende Zeittor wird ebenfalls um einen entsprechenden Betrag verringert. Das Ergebnis wird mit einer besonderen Kennzeichnung im Anzeige-Display 7 angezeigt, so daß die beschriebene Maßnahme erkennbar ist.

Gewerbliche Anwendbarkeit:

Die Erfindung ist insbesondere zur Vermessung von Distanzen geeignet zur Herstellung von Meßgeräten, die nach dem erfindungsgemäßen Verfahren arbeiten. Derartige Meßgeräte sind vielseitig einsetzbar überall dort, wo Distanzen oder Flächen oder Rauminhalte, insbesondere im Bauwesen oder in der Geodäsie, zu vermessen sind.

Liste der Bezugszeichen:

| | |
|---|---|
| 1 | Sende-Schallwandler |
| 2 | Empfänger-Schallwander |
| 3 | Empfänger-Verstärker |
| 4 | Sender |
| 5 | Komparator |
| 6 | Mikroprozessor |
| 7 | Anzeige-Display |
| 8 | Meßtaste |
| 9 | Multiplikations-Taste |
| 10 | Additionstaste |
| 11 | Löschtaste |
| 12 | Umschaltung auf Temperatur-Anzeige |
| 13 | Umschaltung auf Echo-Methode |
| 14 | Umschaltung auf Transponder-Methode |
| 15 | Temperatur-Messung |

**Patentansprüche**

1. Verfahren zum Vermessen von Entfernungen über die Laufzeit von Impulsen nach dem Impuls-Echo-Laufzeit-Verfahren (Echobetrieb) oder dem Impuls-Reflex-Laufzeit-Verfahren (Transponderbetrieb) unter Benützung von Wellen definierter Ausbreitungsgeschwindigkeiten, vorzugsweise Ultraschall, wobei in einer Einzelmessung ein Impulspaket definierter Länge und Frequenz gesendet und nach einer laufzeitabhängigen Zeit als Echo oder Reflex empfangen wird und aus einer Mehrzahl von Einzelmessungen ein Mittelwert gebildet wird, dadurch gekennzeichnet, daß eine Mehrzahl empfangener Impulspakete (Echo- oder Transponderreflex) in ihrer Lage auf der Zeitachse untereinander verglichen werden, in dem aus einer größeren Anzahl von Einzelmessungen eine kleinere oder gleiche Anzahl von Messungen mit vergleichbaren bzw. innerhalb einer gegebenen Toleranz gleichen Ergebnissen zur Auswertung herangezogen wird, und daß die Einzelmessungen jeweils im kürzest möglichen zeitlichen Abstand zueinander erfolgen, indem beim Eintreten eines Antwortimpulses (Impulspaket) die neue Einzelmessung ausgelöst wird, wobei der zeitliche Abstand bei Nichteintreffen eines Antwortimpulses auf eine Maximalzeit begrenzt ist, die der maximal möglichen Reichweite der Vermessung entspricht und daß nach einer erreichten vorgegebenen Anzahl von Meßergebnissen, die untereinander innerhalb der Toleranzen als gleich erkannt werden bzw. vergleichbar sind, die Messung abgebrochen und der Mittelwert gebildet wird.

2. Verfahren nach Anspruch 1, dadurch gekennzeichnet, daß jeder Meßzyklus zwischen 10 und 100 Einzelmessungen auslöst, wobei zwischen 2 bis 20 Meßergebnisse innerhalb einer Toleranz liegen müssen, die vorzugsweise zwischen ± 0,2 bis 3 % vom Meßwert beträgt.

3. Verfahren nach Anspruch 1, dadurch gekennzeichnet, daß bei erkannter Unterschreitung des Abstandes von d < x [m] die ermittelte Distanz nicht zur Anzeige gebracht, sondern mit Starten eines neuen Meßzyklusses die Länge des ausgestrahlten Impulspaketes reduziert wird, das im kleinsten Falle aus nur einem einzigen Impuls (Schwingung) besteht und das empfängerseitig bestehende Zeittor um einen entsprechenden Betrag verringert wird, wobei die Länge von x vorzugsweise "1" Meter ist.

4. Verfahren nach Anspruch 1, dadurch gekennzeichnet, daß bei Nichterfüllung der Bedingungen bzw. bei Nichtvorhandensein von Impuls-Antworten in geeigneter Form die Unmöglichkeit, eine ordnungsgemäße Messung durchzuführen, angezeigt wird.

5. Vorrichtung zum Vermessen von Entfernungen über die Laufzeit von Impulsen nach dem Impuls-Echo-Laufzeit-Verfahren (Echobetrieb) oder dem Impuls-Reflex-Laufzeit-Verfahren (Transponderbetrieb) unter Benützung von Wellen definierter Ausbreitungsgeschwindigkeiten, vorzugsweise Ultraschall, wobei in einer Einzelmessung ein Impulspaket definierter Länge und Frequenz gesendet und nach einer laufzeitabhängigen Zeit als Echo oder Reflex empfangen wird und aus einer Mehrzahl von Einzelmessungen ein Mittelwert gebildet wird, dadurch gekennzeichnet, daß eine Mehrzahl empfangener Impulspakete (Echo- oder Transponderreflex) in ihrer Lage auf der Zeitachse untereinander verglichen werden, indem aus einer größeren Anzahl von Messungen mit vergleichbaren bzw. innerhalb einer gegebenen Toleranz gleichen Ergebnissen zur Auswertung herangezogen wird, und daß die Einzelmessungen jeweils im kürzest möglichen zeitlichen Abstand zueinander erfolgen, indem beim Eintreten eines Antwortimpulses (Impulspaket) die neue Einzelmessung ausgelöst wird, wobei der zeitliche Abstand bei Nichteintreffen eines Antwortimpulses auf eine Maximalzeit begrenzt ist, die der maximal möglichen Reichweite der Vermessung entspricht und daß nach einer erreichten vorgegebenen Anzahl von Meßergebnissen, die untereinander innerhalb der Toleranzen als gleich erkannt werden bzw. vergleichbar sind, die Messung abgebrochen und der Mittelwert gebildet wird.

**Claims**

1. Process for measuring distances by means of the transit time of pulses according to the pulse-echo-transit time process (echo technique) or by means of the pulse-reflection-transit time process (transponder technique), using waves having defined propagation rates, preferably ultrasound, whereby in an individual measurement, a set of pulses having a defined length and frequency is transmitted and, after a transit time-dependent interval, it is received as an echo or reflection, and a mean value is formed on the basis of a multiple number of individual measurements,

characterized in that

a multiple number of received sets of pulses (echo or transponder reflection) are compared to each other in terms of their position on the time axis, by consulting, from a larger number of individual measurements, a smaller or equal number of measurements with comparable results or with equal results within a specified tolerance for purposes of evaluation, and in that the individual measurements are each carried out within the smallest possible time intervals with respect to each other, by triggering the new individual measurement when a response pulse (set of pulses) arrives, whereby, if no response pulse arrives, the time interval is limited to a maximum time which corresponds to the maximum possible range of the measurement, and in that, after a specified number of measured results has been reached which are recognized as being identical or comparable with respect to each other within the tolerances, the measurement is interrupted and the mean value is formed.

2. Process according to Claim 1, characterized in that

each measuring cycle triggers between 10 and 100 individual measurements, whereby between 2 and 20 measured results must fall within a tolerance range which preferably amounts to between ± 0.2 to 3 percent of the measured value.

3. Process according to Claim 1, characterized in that,

when it is recognized that the measured result falls below the distance d < x [m], the ascertained distance ascertained is not displayed but rather, as a new measuring cycle is started, the length of the transmitted set of pulses is reduced which, in the smallest case, consists of just one single pulse (oscillation) and the time gate present on the receiver side is diminished by a corresponding amount, whereby the length of x is preferably "1" meter.

4. Process according to Claim 1, characterized in that,

in case of the non-fulfillment of the conditions or in case of the absence of pulse responses in a suitable form, the impossibility of carrying out a proper measurement is indicated.

5. Device for measuring distances by means of the transit time of pulses according to the pulse-echo-transit time process (echo technique) or by means of the pulse-reflection-transit time process (transponder technique), using waves having defined propagation rates, preferably ultrasound, whereby in an individual measurement, a set of pulses having a defined length and frequency is transmitted and, after a transit time-dependent interval, it is received as an echo or reflection, and a mean value is formed on the basis of a multiple number of individual measurements,
characterized in that

a multiple number of received sets of pulses (echo or transponder reflection) are compared to each other in terms of their position on the time axis, by consulting, from a larger number of individual measurements, a smaller or equal number of measurements with comparable results or with equal results within a specified tolerance for purposes of evaluation, and in that the individual measurements are each carried out within the smallest possible time intervals with respect to each other, by triggering the new individual measurement when a response pulse (set of pulses) arrives, whereby, if no response pulse arrives, the time interval is limited to a maximum time which corresponds to the maximum possible range of the measurement, and in that, after a specified number of measured results has been reached which are recognized as being identical or comparable with respect to each other within the tolerances, the measurement is interrupted and the mean value is formed.

**Revendications**

1. Procédé de mesure de distances sur la base du temps de propagation d'impulsions suivant le procédé temps de propagation impulsion/écho (fonctionnement par échos) ou le procédé temps de propagation impulsion/réflexe (fonctionnement à transpondeur) en utilisant des ondes à vitesse de propagation définie, de préférence des ultrasons, dans lequel, lors d'une mesure individuelle, un paquet d'impulsions de longueur et de fréquence définies est émis et reçu comme écho ou comme réflexe après une durée qui varie selon le temps de propagation et une valeur moyenne est établie à partir d'une multitude de mesures individuelles,
caractérisé par le fait

qu'une multitude de paquets d'impulsions reçus (écho ou réflexe transpondeur) sont comparés les uns avec les autres en ce qui concerne leur position sur l'axe du temps, en sélectionnant, à partir d'un plus grand nombre de mesures individuelles, un nombre plus petit ou égal de mesures dont les résultats sont comparables ou égaux dans les limites d'une tolérance donnée pour les évaluer et que les mesures individuelles s'effectuent dans les intervalles les plus brefs possibles en déclenchant la nouvelle mesure individuelle dès qu'une impulsion de réponse (paquet d'impulsions) arrive, l'intervalle de temps en cas de non arrivée d'une impulsion de réponse étant limité à une durée maximale qui correspond à la distance de mesure maximum possible et que, dès l'obtention d'un nombre prédéterminé de résultats de mesure reconnus comme étant égaux ou comparables dans les limites des tolérances, le processus de mesurage est arrêté et la valeur moyenne est établie.

2. Procédé suivant la revendication 1, caractérisé par le fait
que chaque cycle de mesure déclenche un nombre de mesures individuelles compris entre 10 et 100 et que 2 à 20 résultats de mesure doivent se situer dans les limites d'une tolérance comprise de préférence entre ±0,2 à 3% de la valeur mesurée.

3. Procédé suivant la revendication 1, caractérisé par le fait
que, lorsqu'il a été reconnu que la distance déterminée est inférieure à la distance de d < x [m], celle-ci n'est pas affichée, mais que, par démarrage d'un nouveau cycle de mesure, la longueur du paquet d'impulsions émis est réduite, ledit paquet d'impulsions, dans le moindre des cas, consistant en une seule impulsion (oscillation) et que la fenêtre du temps existant côté récepteur est diminuée d'une valeur correspondante, la longueur de x étant de préférence d'"1" mètre.

4. Procédé suivant la revendication 1, caractérisé par le fait
que, lorsque les conditions ne sont pas remplies, ou à défaut de réponses d'impulsions sous une forme appropriée, l'impossibilité d'effectuer une mesure régulière est affichée.

5. Dispositif de mesure de distances sur la base du temps de propagation d'impulsions suivant le procédé temps de propagation impulsion/écho (fonctionnement par échos) ou le procédé temps de propagation impulsion/réflexe (fonctionnement à transpondeur) en utilisant des ondes à vitesse de propagation définie, de préférence des ultrasons, dans lequel, lors d'une mesure individuelle, un paquet d'impulsions de longueur et de fréquence définies est émis et reçu comme écho ou comme réflexe après une durée qui varie selon le temps de propagation et une valeur moyenne est établie à partir d'une multitude de mesures individuelles,
caractérisé par le fait
qu'une multitude de paquets d'impulsions reçus (réflexe écho ou transpondeur) sont comparés les uns avec les autres en ce qui concerne leur position sur l'axe du temps, en sélectionnant, à partir d'un plus grand nombre de mesures individuelles, un nombre plus petit ou égal de mesures dont les résultats sont comparables ou égaux dans les limites d'une tolérance donnée pour les évaluer et que les mesures individuelles s'effectuent dans les intervalles les plus brefs possibles en déclenchant la nouvelle mesure individuelle dès qu'une impulsion de réponse (paquet d'impulsions) arrive, l'intervalle de temps en cas de non arrivée d'une impulsion de réponse étant limité à une durée maximale qui correspond à la distance de mesure maximum possible et que, dès l'obtention d'un nombre prédéterminé de résultats de mesure reconnus comme étant égaux ou comparables dans les limites des tolérances, le processus de mesurage est arrêté et la valeur moyenne est établie.